# EUROPEAN PATENT APPLICATION

(11) **EP 3 351 429 A1**
(43) Date of publication of application: **25.07.2018**
(21) Application number: 18153074.2
(22) Date of filing: 23.01.2018
(51) Int. Cl.: B60Q 1/00, B60Q 1/26, B60Q 1/30

(54) **FOLDABLE POSITION LIGHTS**

(30) Priority: 24.01.2017 IT 201700007326
(71) Applicant: CNH Industrial Italia S.p.A., 10135 Torino (IT)
(72) Inventor: TAGLIATTI, Christian, 44042 Cento (IT)
(74) Representative: CNH Industrial IP Department

(57) **Abstract**

A system or arrangement of position or marker lights (22) for an off-road vehicle (10) includes at least one fender (20) having at least one position or marker light assembly (54) connected to it by way of a foldable mounting arrangement (34, 30A, 30B, 32) that is operable to place the at least one position or marker light assembly (54) in an extended position and in a retracted position. The foldable mounting arrangement (34, 30A, 30B, 32) may include two hinges (30A, 30B) interconnected by a connecting plate (32), with one hinge (30B) attached to a light mount (34), and the other hinge (30A) attached to the light assembly (54). The hinges (30A, 30B) may include end position detents to hold the position or marker lights (22) in the proper orientation in the extended and retracted positions.

## Description

### BACKGROUND OF THE INVENTION

The present invention relates to foldable position or marker lights for agricultural tractors or other large agricultural, industrial, or construction vehicles, and, more specifically to a foldable position or marker lights that articulate outward in order to be properly positioned relative to large or extra tires, and that articulate inward in order to be properly positioned relative to narrow tires.

Besides performing agricultural functions in the field, agricultural tractors often run on public roads either in a towing capacity, such as moving implements or grain wagons from place to place, or simply in relocating from one field to another. For this reason, as well as for general safety, such agricultural tractors are often provided with position or marker lights. These position or marker lights may include direction-indicator lamps, hazard-warning signals, stop lamps, side lamps, or rear fog lamps, as non-limiting examples. Such position or marker lights provide visibility of the tractor to other road traffic, give indication of the intentions and actions of the agricultural tractor, and help to make others aware of the space occupied by the agricultural tractor, which is generally oversize as compared to other vehicles on the road. The location of the position or marker lights on the tractor relative to the wheels and tires, and/or relative to the overall width of the agricultural tractor, may be governed by legislative requirements.

However, agricultural tractors are often able to be configured with various wheel and tire arrangements, according to the present intended function of the agricultural tractor. For example, an agricultural tractor may at times be provided with wider tires, or with dual wheels and tires, in order to provide greater traction and to lower overall ground pressure to reduce soil compaction. The same tractor, or a tractor of the same model, may at other times be provided with single sets of narrow tires, in order to work in close quarters or for the sake of convenience when the agricultural tractor is performing both on and off-road functions. Under these conditions wherein the overall width, and thus the appropriate location of the position or marker lights, of an individual agricultural tractor or of agricultural tractors of the same model changes, it may be necessary to locate the position or marker lights further outboard from the centerline of the agricultural tractor than is otherwise necessary or convenient when the individual tractor or tractor of the same model is configured with single sets of narrow tires.

Agricultural tractors configured for use in orchards or vineyards are particularly problematic when provided with position or marker lights adapted for use with agricultural tractors of a wider configuration. Such position or marker lights, which may be located far outboard from the fenders or cab pillars in order to accommodate wider configurations, often become entangled in tree branches and vines, thereby damaging the crop and/or the position or marker lights and their mounting. Even on agricultural tractors presently arranged in a narrow configuration, such as with single narrow tires, position or marker lights located unnecessarily outboard from the centerline of the agricultural tractor are subject to potential wear and damage.

International Patent Application No. PCT/EP2011/062764 attempts to overcome this deficiency by providing a robust mounting that functions to support both the fender and the position or marker lights. However, this does not address the susceptibility of the position or marker light itself to damage, nor does it avoid damage to any crops that become entangled in the position or marker light. Further, this application does not address variability in the overall width of the agricultural tractor.

European Patent Application No. EP19970203042 provides orientable lights located beneath the cab roof, in order to avoid interference with tree branches. The orientable lights have a two axis mounting that allows them to be aimed, but the orientable lights remain essentially within a seat provided in the cab structure. Therefore, this application also fails to address variability in the overall width of the agricultural tractor.

What is needed in the art, therefore, is a system or arrangement for position or marker lights on an agricultural tractor or other large agricultural, industrial, or construction vehicle that is adaptable to changes in the overall width of an individual tractor, or of tractors of the same model, due to changes in the tire configuration or other configuration changes. What is further needed in the art is such a system or arrangement that avoids such position or marker lights protruding substantially outside the peripheral envelope of the tractor fenders when in a configuration accommodating to a narrower overall width, such as when working in close quarters in an orchard or vineyard.

### SUMMARY OF THE INVENTION

Embodiments of the present invention provide position or marker lights on an agricultural tractor or other large agricultural, industrial, or construction vehicle whereby the location of the position or marker lights on the agricultural tractor or other vehicle is adaptable to changes in the overall width of an individual tractor or vehicle, or of tractors or vehicles of the same model, due to changes in the tire configuration or other configuration changes. The system or arrangement according to various embodiments of the present invention avoids the position or marker lights protruding substantially outside the peripheral envelope of the tractor or vehicle fenders when arranged to accommodate a configuration having narrower overall width, such as when working in close quarters, such as in an orchard or vineyard.

Embodiments of the present invention utilize position or marker lights that articulate or unfold outward in order to be properly positioned relative to large or extra tires, and that articulate or fold inward in order to be properly positioned relative to narrow tires. In this way, the position or marker lights, which may be direction-indicator lamps, hazard-warning signals, stop lamps, side lamps, or rear fog lamps, as non-limiting examples, provide properly spaced indication of the operating envelope of the agricultural tractor or other vehicle when the agricultural tractor or other vehicle is equipped with wide or extra tires and wheels, or is otherwise configured to occupy a wider space. Conversely, when the agricultural tractor or other vehicle is equipped with narrow tires and wheels, or is otherwise configured to occupy a narrower space, and the position or marker lights according to embodiments of the present invention are in their inward folded positions, they are largely protected from damage from vines and branches by being substantially within the rearwardly projected envelope of the fenders and by being partially within the fenders themselves.

Embodiments of the present invention may use joints such as hinges that are provided with end position detents in the outward configuration of the position or marker lights and in the inward configuration of the position or marker lights. In this way, the foldable position or marker light may be configured in both the retracted position and the extended position, while remaining in a proper rearward orientation and while remaining in a proper working orientation. In the present context, proper working orientation refers to the sequence of lights in a given position or marker light assembly from the innermost lamp in the assembly relative to the longitudinal centerline of the vehicle, to the outermost lamp in the assembly. As a non-limiting example, if the innermost lamp in a given position or marker light assembly is a reverse light, the middle lamp in the light assembly is a stop lamp, and the outermost lamp in the light assembly is a turn indicator lamp, then the lamps remain in the order from innermost to outermost of reverse light, stop lamp, and turn indicator lamp, irrespective of whether the position or marker light assembly is in its inward configuration or in its outward configuration.

In an embodiment of the present invention wherein the joints involved are embodied as hinges separated by a connecting element, the hinges may be two position hinges having end position detents about 180 degrees apart, so that the position or marker lights are held in either the extended or unfolded position, or in the retracted or folded position. Although embodiments of the present invention are illustrated as manually reconfigurable foldable position or marker lights, it is also within the scope of the present invention that the foldable position or marker lights may be remotely actuated, such as through a linkage or cable. Alternately, the foldable position or marker lights may be power actuated, such as by way of electrical, pneumatic, hydraulic, or other actuator device. In yet another embodiment, the foldable position or marker lights may be operable to automatically return from the extended position to the retracted position upon contact between the foldable position or marker lights and an obstacle in the environment, such as a branch or vine. This may be accomplished by an over-the-center spring arrangement or other suitable mechanism.

While embodiments of the present invention are illustrated as applicable to the rear fenders of an agricultural tractor or other large agricultural, industrial, or construction vehicle, it is equally contemplated that the principles of embodiments of the present invention may be applied to other locations on the tractor or vehicle, such as position or marker lights on the front fenders.

The invention in one form is directed to a system or arrangement of position or marker lights for an off-road vehicle. The system or arrangement includes at least one fender or cab pillar having at least one position or marker light assembly connected to it. The system or arrangement is characterized in that the at least one position or marker light assembly is connected to the vehicle by way of a foldable mounting arrangement. The foldable mounting arrangement is operable to place the at least one position or marker light assembly in an extended position and in a retracted position.

The invention in another form is directed to an off-road vehicle having a chassis and at least wheel and tire assembly. At least one fender or cab pillar has at least one position or marker light assembly connected to it by way of a foldable mounting arrangement. The foldable mounting arrangement is operable to place the at least one position or marker light assembly in an extended position and in a retracted position.

An advantage of the system or arrangement of foldable position or marker lights according to various embodiments of the present invention is that it is easily assembled and utilizes a light housing and lens sub-assembly of relatively conventional and interchangeable design. Another advantage of the system or arrangement of foldable position or marker lights according to embodiments of the present invention is that it is robust and well protected in use, simple to service, and easily replaceable in the event of damage notwithstanding the robust design.

Additional features and advantages of the invention will be made apparent from the following detailed description of illustrative embodiments that proceeds with reference to the accompanying drawings.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a rear view of an agricultural tractor according to an embodiment of the invention;
Fig. 2 is a rear right isometric view of a foldable position or marker light in a folded configuration, according to an embodiment of the invention;
Fig. 3 is a rear right isometric view of a foldable position or marker light in an extended configuration, according to an embodiment of the invention;
Figs. 4A and 4B are rear upper isometric and front lower isometric views, respectively, of a connecting plate and hinges subassembly, according to an embodiment of the invention;
Figs. 5A and 5B are upper front isometric and lower front isometric views, respectively, of a light mount subassembly, according to an embodiment of the invention;
Figs. 6A and 6B are lower front isometric and upper rear isometric views, respectively, of a fender and mud shield subassembly, according to an embodiment of the invention;
Figs. 7A, 7B, and 7C are rear left isometric, rear left isometric, and front lower isometric views, respectively of a light mount subassembly, being installed into a fender and mud shield subassembly, according to an embodiment of the invention;
Fig. 8 is a front lower isometric view of a light mount subassembly installed in a fender and mud shield subassembly, according to an embodiment of the invention;
Fig. 9A is an upper rear isometric view of a cable protector, according to an embodiment of the invention;
Fig. 9B is a lower front left isometric view of a cable protector installed in a fender, according to an embodiment of the invention;
Figs. 10A and 10B are upper front isometric views of a light assembly and mounting bracket being attached to a connecting plate and hinges subassembly, according to an embodiment of the invention;
Figs. 11A and 11B are upper rear isometric and upper front isometric views, respectively, of a lite assembly, connecting plate, and hinges subassembly, according to an embodiment of the invention; and
Fig. 12 is an upper rear isometric view of a lite assembly, connecting plate, and hinges subassembly installed on a light mount subassembly, itself installed in a fender and mud shield subassembly, according to an embodiment of the invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "forward", "rearward", "left" and "right", when used in connection with the agricultural tractor and/or components thereof are usually determined with reference to the direction of forward operative travel of the vehicle, but again, they should not be construed as limiting. The terms "longitudinal" and "transverse" are determined with reference to the fore- and-aft direction of the agricultural tractor and are equally not to be construed as limiting. The term "agricultural tractor" is used herein for convenience, but should not be construed as limiting, as embodiments of the present invention are contemplated as encompassing any load-bearing or off-road vehicle to which the general principles of the disclosure may apply.

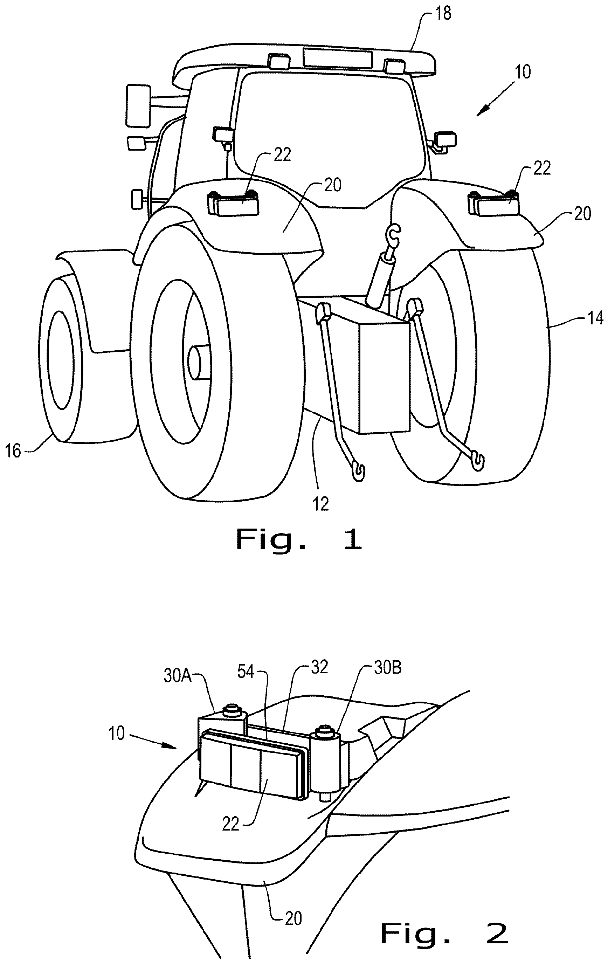

Referring now to the drawings, and more particularly to Fig. 1, there is shown an agricultural tractor 10, according to an embodiment of the present invention, having a chassis 12 including front wheels and tires 16 and rear wheels and tires 14. An operator cab 18 provides a working environment for an operator of the agricultural tractor 10 while also providing protection from the elements. Position or marker lights 22, such as direction-indicator lamps, hazard-warning signals, stop lamps, side lamps, or rear fog lamps, as non-limiting examples, are attached to fenders 20 of the agricultural tractor 10, in this case rear fenders. In other situations the position or marker lights 22 are attached to elements of operator cab 18, like cab pillars or the cab roof. The position or marker lights 22 are arranged such that in the retracted position as shown in Fig. 1, the position or marker lights 22 are largely protected from damage by being substantially within the rearwardly projected outline of the fenders 20. The position or marker lights 22 function to provide visibility of the agricultural tractor 10, such as to other road traffic, or to give indication of the intentions and actions of the agricultural tractor 10, as non-limiting examples.

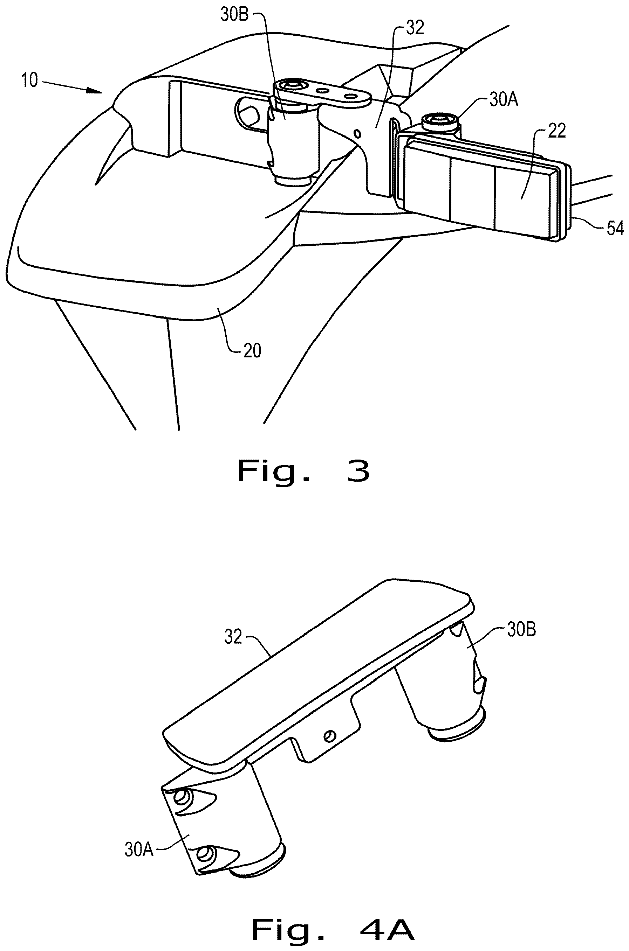

When the agricultural tractor 10 takes on a wider configuration, such as by use of additional or wider rear wheels and tires (not shown in Fig. 1), the position or marker lights 22 may be extended laterally outward from their illustrated positions, as will be shown in subsequent figures. Turning therefore to Figs. 2 and 3, rear right isometric views are shown of an embodiment of the present invention, being a foldable position or marker light 22. The foldable position or marker light 22 is shown in a retracted position in Fig. 2, and in an extended position in Fig. 3. The foldable position or marker light 22 is made up of a light assembly 54, which includes a housing and lenses, and is connected to a hinge 30A. The hinge 30A is connected to a connecting plate 32, which is connected to another hinge 30A. The hinge 30A is connected to a right rear fender 20 of the agricultural tractor 10. In this way, the foldable position or marker light 22 may be configured in both the retracted position and the extended position, while remaining in a rearward orientation. In order to further ensure the proper rearward pointing orientation of the foldable position or marker light 22, each of the hinges 30A and 30B may be two-position hinges, such that the hinges 30A and 30B are provided with end position detents in their folded and unfolded positions. Although illustrated as manually reconfigurable foldable position or marker lights 22, it is also within the scope of the present invention that the foldable position or marker lights 22 may be remotely actuated, such as through a linkage or cable. Alternately, the foldable position or marker lights 22 may be power actuated, such as by way of electrical, pneumatic, hydraulic, or other actuator device.

Figs. 4A, 4B, 5A, 5B, 6A, 6B, 7A, 7B, 7C, 8, 9A, 9B, 10A, 10B, 11A, 11B, and 12 show a system and arrangement of foldable position or marker lights 22 according to an embodiment of the present invention in progressive stages of assembly, thereby illustrating advantageous aspects of the present invention, such as robust design and manufacturability.

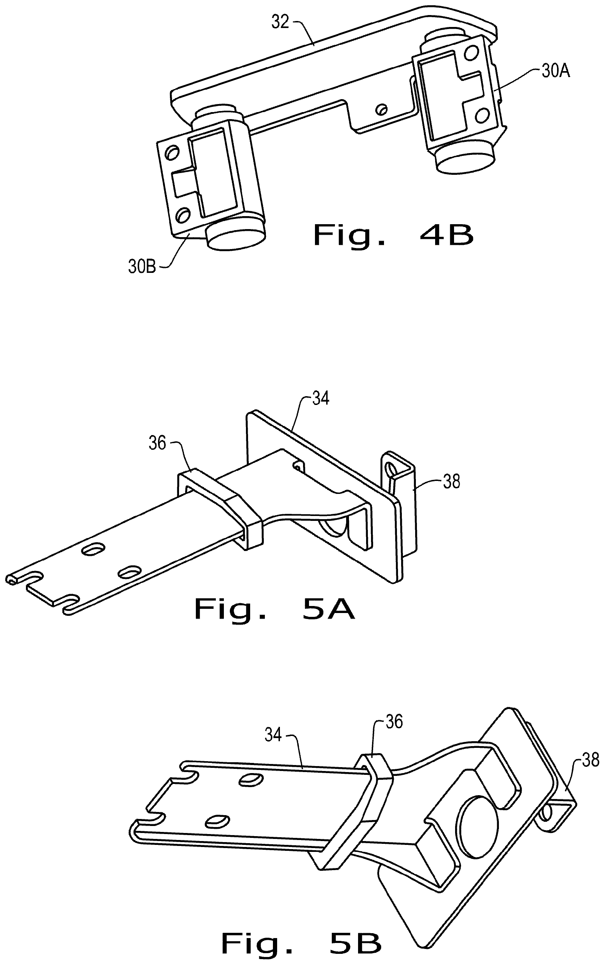

Figs. 4A and 4B, then, show rear upper isometric and front lower isometric views, respectively, of hinges 30A and 30B connected to connecting plate 32. Hinges 30A and 30B are substantially parallel, and may again be two-position hinges having end position detents in the illustrated position and rotated approximately 180 degrees from the illustrated position. Figs. 5A and 5B show upper front isometric and lower front isometric views, respectively, of a light mount 34 having a rubber seal 36 and an extension bracket 38 affixed thereto. The extension bracket 38 may be affixed to the light mount 34 such as by welding, bonding, or by fasteners, as non-limiting examples, or may be integrally formed in the light mount 34.

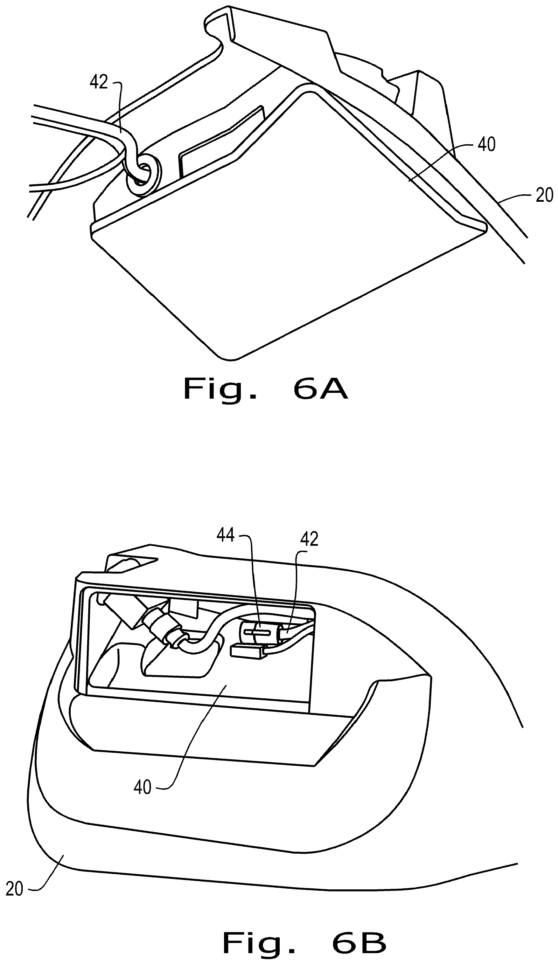

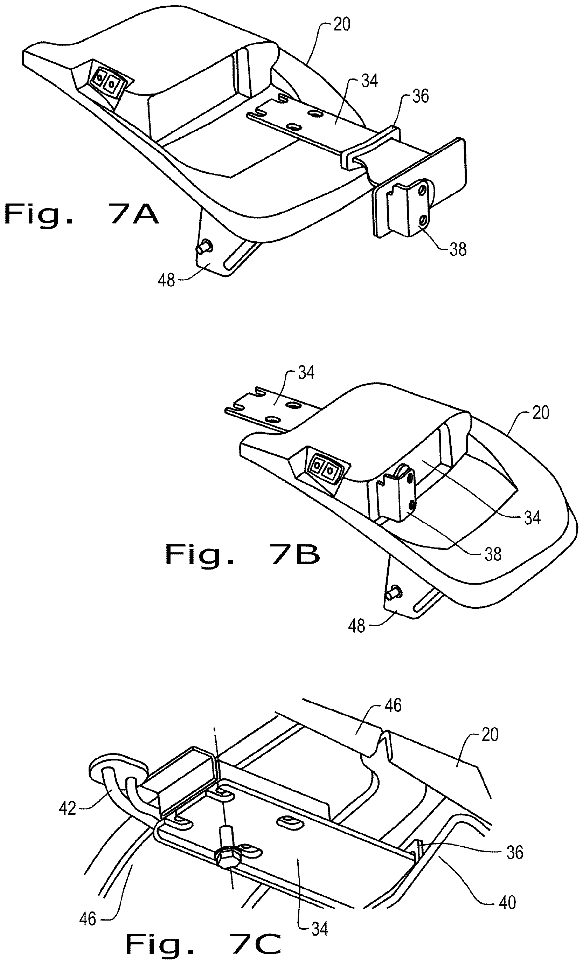

Figs. 6A and 6B show lower front isometric and upper rear isometric views, respectively, of a left fender 20 of the agricultural tractor. A mud shield 40 covers the underside of the fender 20 creating a protected area for the connectors 44 and electric cables 42 that provide electrical power to the foldable position or marker lights 22 (not shown in Figs 6A and 6B). Figs. 7A and 7B show an upper left isometric view, and Fig. 7C a lower left isometric view, of the light mount 34 being installed into the left fender 20 of the agricultural tractor. The left fender 20 itself is attached to a structure 46 of the agricultural tractor, and includes a fender mounting bracket 48 for further support. The light mount 34 is inserted into the cavity created by the fender 20 and the mud shield 40, so that the end of the light mount 34 having the extension bracket 38 faces rearward, and the elongated section of the light mount 34 extends through a gap between the fender 20 and the mud shield 40, which is thereby sealed by the rubber seal 36. A single fastener initially attaches the light mount 34 to the structure 46 of the agricultural tractor. Electric cables 42 extend from the structure 46 to the cavity between the fender 20 and the mud shield 40.

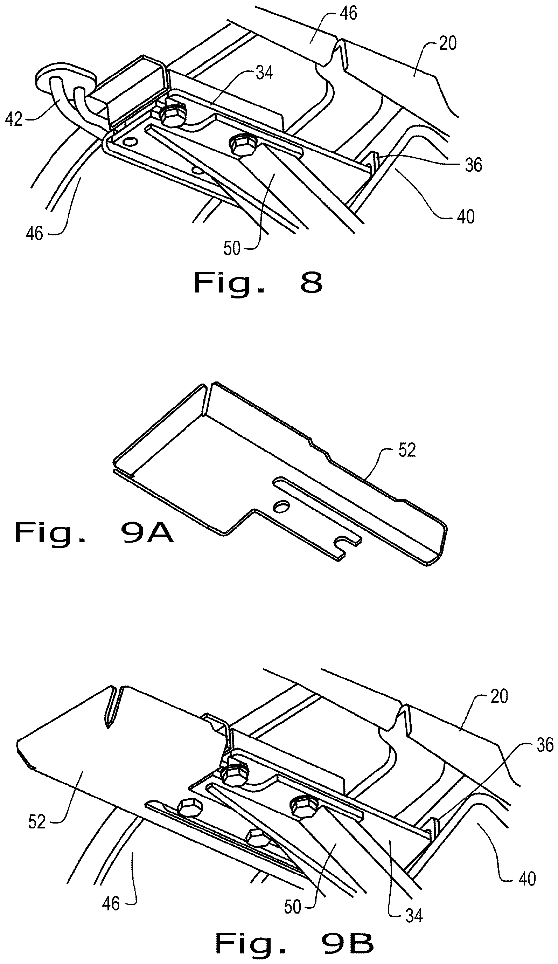

Fig. 8 shows a similar lower left isometric view as Fig. 7C of the light mount 34 installed into the left fender 20 of the agricultural tractor. The left fender 20 is again attached to a structure 46 of the agricultural tractor. The light mount 34 protrudes through a gap in the cavity created by the fender 20 and the mud shield 40, which is sealed by the rubber seal 36. Electric cables 42 extend from the structure 46 to the cavity between the fender 20 and the mud shield 40. In this stage of assembly, a mounting plate holder 50, such as for attaching a license plate, is attached to the structure 46 of the agricultural tractor over the light mount 34, using another fastener.

Fig. 9A shows an upper rear isometric view of a cable protector 52. Fig. 9B shows another lower left isometric view of the light mount 34 installed into the left fender 20 of the agricultural tractor. The light mount 34 again protrudes through a gap in the cavity created by the fender 20 and the mud shield 40, which is sealed by the rubber seal 36. The light mount 34 and the mounting plate 50 are again attached to structure 46 of the agricultural tractor. The cable protector 52 is attached to the structure 46 of the agricultural tractor over the top of the light mount 34 and the mounting plate 50, and serves to protect the electric cables 42 (not visible).

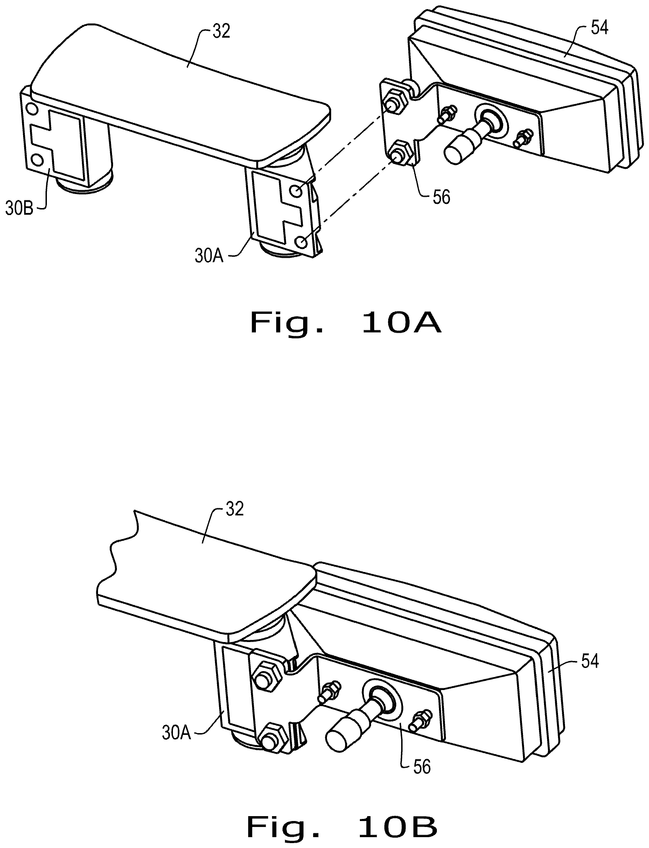

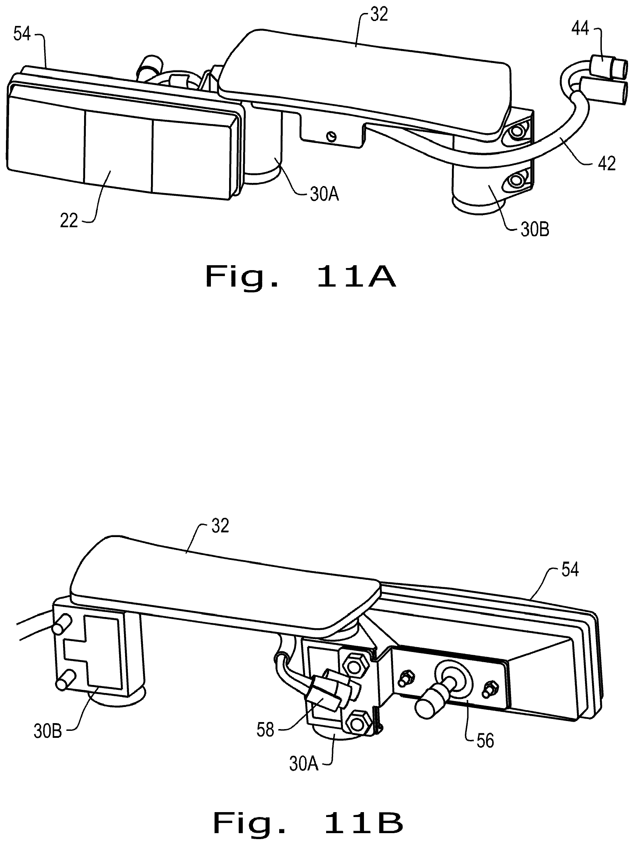

Turning now to Figs. 10A and 10B, upper front isometric views are shown of hinges 30A and 30B connected to connecting plate 32. Light assembly 54 is attached to hinge 30A using mounting bracket 56. Figs. 11A and 11B show additional upper rear isometric and upper front isometric views, respectively, of hinges 30A and 30B connected to connecting plate 32. The light assembly 54 is again attached to hinge 30A using mounting bracket 56. Fig. 11A affords a view of the position or marker lights 22 that are mounted in the light assembly 54. Electric cable 42 having connectors 44 provides electric power for position or marker lights 22, and is routed to the rear of hinge 30B and to the front of hinge 30A. Retaining flap 58 holds the electric cable 42 in proper position in front of hinge 30A.

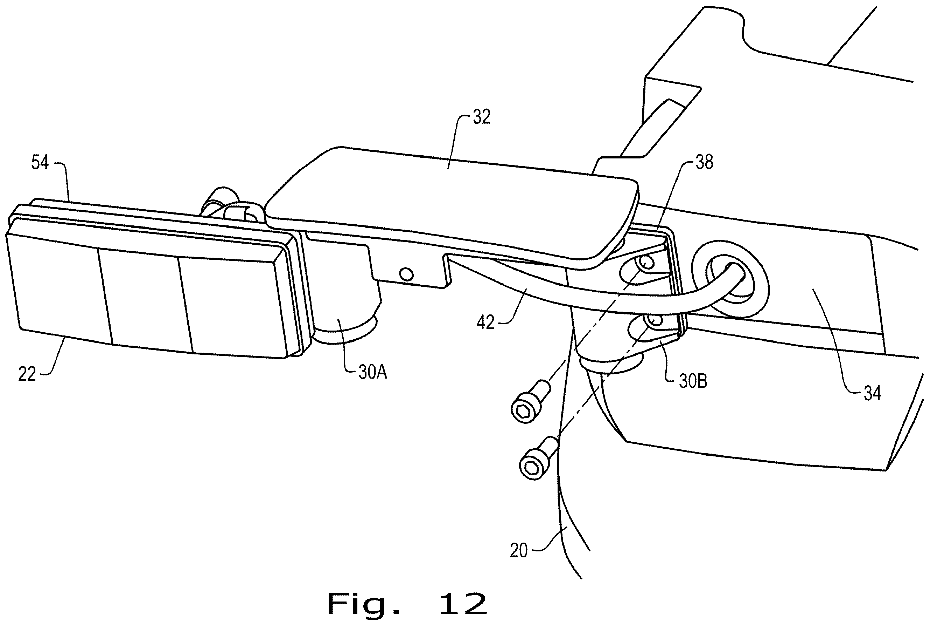

Turning now to Fig. 12, an upper rear isometric view is shown of the fender 20 with the light mount 34 inserted into the space between the fender 20 and the mud shield 40 (not visible). The light assembly 54 includes the position or marker lights 22, and is at this point preassembled to the hinge 30A using the mounting bracket 56 (not visible), and therefore preassembled to the connecting plate 32 and hinge 30B. At this point in the process of assembly, the light assembly 54, connecting plate 32, and hinges 30A and 30B can be simply attached to the extension bracket 38 of the light mount 34 using ordinary fasteners. This preassembly of the light assembly 54, connecting plate 32, and hinges 30A and 30B simplifies the process of assembly, as the preassembly of the light assembly 54, connecting plate 32, and hinges 30A and 30B can take place off the primary assembly line. Once the light assembly 54, connecting plate 32, and hinges 30A and 30B are attached to the extension bracket 38, it only remains to pass the electric cable through the front of the light mount 34 into the space between the fender 20 and the mud shield 40.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A system or arrangement of position or marker lights (22) for an off-road vehicle (10) comprising:
at least one position or marker light assembly (22, 54) connected to the vehicle (10);
**characterized in that:**
said at least one position or marker light assembly (22, 54) is connected to the vehicle (10) by way of a foldable mounting arrangement (34, 30A, 32, 30B), said foldable mounting arrangement (34, 30A, 32, 30B) operable to place said at least one position or marker light assembly (22, 54) in an extended position and in a retracted position, said foldable mounting arrangement (34, 30A, 32, 30B) being configured to retain said position or marker light assembly (22, 54) in a proper working orientation in said extended position and in said retracted position.

2. The system or arrangement of claim 1, wherein:
said foldable mounting arrangement further comprises a first hinge (30A) connected to said at least one position or marker light assembly (22, 54), a connecting element (32) connected to said first hinge (30A), a second hinge (30B) connected to said connecting element (32) opposite to and substantially parallel to said first hinge (30A), said second hinge (30B) being one of:
further connected to a light mount (34), said light mount (34) being installed into at least one fender (20);
further connected to at least one fender (20); and
further connected to at least one operator cab element.

3. The system or arrangement of claim 2, wherein:
said at least one position or marker light assembly (22, 54), said first hinge (30A), said second hinge (30B), and said connecting element (32) further comprising a sub-assembly which may be pre-assembled prior to installation.

4. The system or arrangement of claims 1 - 3, wherein:
said foldable mounting arrangement (34, 30A, 32, 30B) at least partially occupying a cavity formed by the at least one fender (20) and at least one shield (40).

5. The system or arrangement of claims 1 - 3, wherein:
said at least one position or marker light assembly (22, 54) at least one of adjoining and partially extending within a cavity formed by the at least one fender (20) and at least one shield (40).

6. The system or arrangement of claims 1 - 5, wherein:
said first hinge (30A) and said second hinge (30B) each being provided with two end position detents, one end position detent of each of said first hinge (30A) and said second hinge (30B) being engaged when in said extended position, and another end position detent of each of said first hinge (30A) and said second hinge (30B) being engaged when in said retracted position; and
said two end position detents of each of said first hinge (30A) and said second hinge (30B) being arranged so that said first hinge (30A) and said second hinge (30B) hold said at least one position or marker light assembly (22, 54) in a longitudinal orientation relative to the off-road vehicle (10) in said extended position and in said retracted position.

7. The system or arrangement of claim 6, wherein:
said two end position detents of each of said first hinge (30A) and said second hinge (30B) being placed approximately 180 degrees apart in the rotation of said first hinge (30A) and of said second hinge (30B).

8. The system or arrangement of claims 1 - 7, wherein:
said retracted position of said at least one position or marker light assembly (22, 54) being within a peripheral envelope of said at least one fender (20).

9. The system or arrangement of claim 8, wherein:
said retracted position of said at least one position or marker light assembly (22, 54) further being within a rearwardly projected outline of the at least one fender (20).

10. The system or arrangement of claims 1 - 9, wherein:
said foldable mounting arrangement (34, 30A, 32, 30B) being at least one of manually configurable, remotely actuated, and power actuated, in order to place said at least one position or marker light assembly (22, 54) in said extended position and in said retracted position.

11. The system or arrangement of claims 1 - 10, wherein:
said foldable mounting arrangement (34, 30A, 32, 30B) being arranged so that upon forcible contact of said at least one position or marker light assembly (22, 54) with an obstacle, said foldable mounting arrangement automatically returns from said extended position to said retracted position.

12. The system or arrangement of claims 1 - 11, wherein:
said at least one position or marker light assembly (22, 54) is further connected to at least one rear fender (20) of the off-road vehicle.

13. The system or arrangement of claims 1 - 12, further comprising:
at least one electric cable (42) connected to said at least one position or marker light assembly (22, 54), said at least one electric cable (42) being at least partially protected by a cable protector (52), said at least one electric cable (42) being further retained to at least one hinge (30A, 30B) by a retaining device (58).

14. The system or arrangement of claims 1 - 13, wherein:
said at least one position or marker light assembly (22, 54) further comprises at least one of at least one direction-indicator lamp, at least one hazard-warning signal, at least one stop lamp, at least one side lamp, and at least one rear fog lamp.

15. An off-road vehicle (10) comprising:
a chassis (12), at least wheel and tire assembly (14, 16), at least one fender (20), and the system or arrangement of position or marker lights (22) of any of claims (1 - 14).
